(19) Europäisches Patentamt
European Patent Office
Office européen des brevets

(11) **EP 0 813 815 B1**

(12) **EUROPEAN PATENT SPECIFICATION**

(45) Date of publication and mention
of the grant of the patent:
**02.05.2003 Bulletin 2003/18**

(51) Int Cl.[7]: **A23C 11/04**, A23C 11/06,
A23F 5/40

(21) Application number: **97303830.0**

(22) Date of filing: **04.06.1997**

(54) **Creamy, thick, hot beverage foam**

Heissgetränk mit kremigem dickem Schaum

Mousse de boisson chaude, crémeuse et épaisse

(84) Designated Contracting States:
**AT BE CH DE DK ES FI FR GB GR IE IT LI LU MC NL PT SE**

(30) Priority: **21.06.1996 US 669990**

(43) Date of publication of application:
**29.12.1997 Bulletin 1997/52**

(73) Proprietor: **KRAFT FOODS NORTH AMERICA, INC.**
**Northfield, Illinois 60093 (US)**

(72) Inventors:
• **Scinto, Christopher Jon**
**Tarrytown, New York 10591 (US)**
• **Blanchard, Lou Anne**
**Hopewell Junction, New York 12533 (US)**
• **Conti, Gail Spiro**
**Stamford, Connecticut 06903 (US)**

(74) Representative: **Eyles, Christopher Thomas**
**W.P. THOMPSON & CO.**
**Celcon House**
**289-293 High Holborn**
**London WC1V 7HU (GB)**

(56) References cited:
**EP-A- 0 458 310**      **WO-A-96/08153**
**GB-A- 2 301 015**

**Description**

Background Of The Invention

The invention relates to particulate, dry foaming beverage creamers, more particularly to such creamers which are suitable for use in particulate, dry, instant hot beverage mix products which contain an instant coffee component. In another aspect, the invention relates to such particulate, dry, instant hot beverage mix products which contain a foaming creamer.

Particulate, dry, instant hot beverage mix products which contain an instant coffee component and which include a foaming creamer component are known for producing hot beverages such as cappuccino, café latté, flavored coffees and the like, the hot beverages having a surface foam which simulates the surface foam of brewed cappuccino and café latté.

For brewed cappuccino and café latté, surface foam is usually provided by steamed milk. In the instant dry mix beverage products, surface foam is provided by a dry, particulate foaming creamer. Such foaming creamers may be dairy-based or non-dairy based or both, and the term "creamer" is used herein in its broad sense of whitener and not in a narrow sense of being a dairy product or even dairy based. Foaming creamers include protein, lipid and filler as essential components. In addition, foaming creamers include either an incorporated gas or carbonation system, or both, for generating a gas when the creamer is dispersed in the hot beverage liquid.

Example 1 of published European patent specification No. 0 458 310 A1 discloses a foaming coffee whitener made by mixing and then spray drying the following ingredients:

| Ingredients | % by weight of dry mass |
|---|---|
| Skimmed with dry mass | 44.58 |
| Lactose | 27.87 |
| Plant tar | 27.25 |
| Disodium orthophosphate | 0.30 |

Claim 1 of this document is directed to a powdered foaming coffee whitener containing:

| Skimmed milk dry substance | 40 to 65% by weight |
|---|---|
| Lactose | 25 to 35% by weight |
| Tar | 10 to 20% by weight |
| Caseinate | 1.0 to 2.5% by weight |
| Alkali phosphate | 0.2 to 1.0% by weight |

Based upon an average protein content of about 35% by weight of the skimmed milk dry substance (see Belitz and Grosch, Lehrbuch der Lebensmittelchemie, Springer Berlin 1985, Table 10.21). Such a coffee whitener would have a protein concentration of about 14 to 22.75% by weight. It is also proposed in EP-A-0458310 to inject gas into the mixture before the spray drying step.

Gas-injected foaming creamers are disclosed in U.S. Patent No. 4,438,147, Foaming creamers containing a carbonation system are disclosed in published German patent application No. 4,407,361 A1 published on September 7, 1995, and in published application PCT/US95/10360 published on March 21, 1996, No. WO 96/08153. In this published PCT application a particular dry mix foaming creamer composition is proposed which comprises a creamer for coffee beverages and the like and a foam generating component comprising a food grade acidulant and an alkali metal carbonate or bicarbonate.

While the known foaming creamers are capable of producing a considerable amount of foam, the quality of the foam, particularly when the amount of foam produced from a given amount of creamer is relatively high, is often relatively loose, runny and non-creamy.

It is an object of the invention to provide particulate, dry, foaming creamers which produce a creamy foam in instant hot coffee-based beverages. It is a further object of the invention to provide particulate, dry, instant hot coffee-based beverage products which contain a particulate dry foaming creamer and which produce a creamy foam in the hot coffee-based beverage.

Brief Summary Of The Invention

The foregoing and other objects which will be apparent from the description which follows are achieved in accordance with the invention which provides a particulate, dry, foaming beverage creamer comprising protein, lipid and filler, said creamer being gas-injected and/or containing carbonation components for causing foaming on dispersing the creamer in a hot beverage, wherein the protein content of the foaming creamer is not greater than 40% by weight based on the weight of the creamer but not including a foaming creamer having a protein content less than 29% by weight, and by providing particulate, dry, instant hot beverage products containing a coffee component and containing such a foaming creamer.

Description Of Preferred Embodiments

The particulate foaming creamer may be a foaming dairy creamer which contains milk solids or milk solids having a reduced quantity of milk fat or a foaming non-dairy creamer which contains no appreciable quantity of milk ingredients.

The particulate foaming creamer is made up of individual particles which contain, as essential components, protein, lipid and filler.

All percentages herein are percentages by weight unless otherwise indicated. The protein content of the creamer particles is not greater than 40% based on the weight of the creamer. Moreover, it is essential that this protein content be present in the individual creamer particles themselves and not merely present in a separate ingredient of a particulate creamer formulation.

While the protein may be one or more of any food grade proteins, such as milk protein, soy protein or egg protein, milk protein is preferred for taste considerations. Accordingly, it is preferred that at least 50% by weight of the protein content of the foaming creamer particles is milk protein. Moreover, it is preferred that at least 50% by weight of the total protein content of the formulation is provided in the formulation as milk solids as opposed to being in the form of a proteinaceous material derived from milk solids such as sodium caseinate. Of the total protein content of the formulation, milk protein content is preferably from 50-100%. Egg protein content, if present, is preferably from 5-25%, and vegetable protein, if present, is preferably from 5-25%.

The lipid content of the foaming creamer particles can be a dairy or non-dairy fat or oil. Suitable non-dairy fats include partially hydrogenated vegetable oil having a melting point of about 100 to 120°F (about 37.8 to 48.9°C). Preferred non-dairy lipids include partially hydrogenated soybean oil, coconut palm kernel oil and palm kernel oil.

Total lipid content of the creamer particles, including any lipid that is present as such or which may be present with the proteinaceous component or the filler component of the creamer particles, is suitably 5 to 60%, preferably 15-40% and more preferably 15-25%, based on the weight of the creamer particles.

Suitable fillers include water soluble carbohydrates, such as maltodextrin, lactose, corn syrup solids and sugar. Preferred water soluble carbohydrates include corn syrup solids or lactose or, for a sugar-free product, maltodextrin. The total amount of filler in the creamer particles is suitably present in an amount of 10 to 75%, preferably 20 to 65%, and more preferably 30 to 55% based on the weight of the creamer.

Filler may be present with the protein constituent of the creamer particles. For example, when non-fat milk solids or concentrated milk solids are employed to provide the protein, lactose, which is suitable as a filler, is also present in the creamer particles. Where reference is made to the filler content of the creamer particles, the content is intended to include all of the filler that is present in the creamer particles, and not just the filler which is present in the creamer particles as such. The same is true with respect to the protein content and lipid content of the creamer particles.

The creamer particles may be directly packaged either alone or with carbonation components for use as a foaming creamer product. Alternatively, foaming creamer products containing the present foaming creamer particles, either alone or with carbonation components, may be packaged with other ingredients, such as one or more sweeteners or flavoring agents, or both.

The foaming creamers can be prepared by conventional techniques such as those described in the U.S. patents and patent applications referred to above. Preferred techniques are generally the same as used in making powdered milk. In a preferred method, the protein, lipid, filler and other optional ingredients are blended with water to provide a liquid slurry suitable for spray drying. The mixture is usually pasteurized and homogenized and is then spray dried. In order to produce a gas-injected type of foaming creamer, a gas such as carbon dioxide or nitrogen is blended into the slurry such as being injected into the slurry through a sparger, preferably after homogenization of the slurry, while the slurry is being fed to the dryer. In order to produce a carbonation-type of foaming creamer, particulate carbonation components are blended with the spray dried creamer particles which may or may not be gas-injected.

The carbonation components include a food grade acidulant and an alkali metal carbonate or bicarbonate. The food grade acidulant of the foam-generating carbonation component is solid at temperatures of up to at least about 150°F (about 65.6°C), soluble in hot water, preferably provided in particulate form, and can be any food grade acidulant capable of neutralizing the carbonate or bicarbonate component. Preferred food grade acidulants include glucono-delta-lactone, alkali metal acid pyrophosphates, mono calcium phosphate and citric acid, or food grade salts thereof. Less preferred food grade acidulants include organic acids such as malic, fumaric, lactic, formic and tartaric and acidic food grade gums such as gum arabic, low methoxy pectin and modified cellulose gums. The term "food grade acidulant" as used herein is intended to include food grade salts thereof.

The carbonate or bicarbonate of the foam-generating carbonation component is soluble in hot water, solid at temperatures of up to at least about 150°F (about 65.6°C), preferably provided in particulate form, is preferably a bicarbonate and is more preferably potassium bicarbonate. A sodium salt may also be used but the potassium salt can be used in a greater amount without an adverse effect on beverage flavor.

The amount of the carbonate or bicarbonate to be included in the creamer is dependent on the amount of foam which is intended to be produced and on the extent to which the creamer is also gas-injected. A preferred amount of the carbonate or bicarbonate, when present, is from 1 to 7% and more preferably from 2 to 5%, based on the creamer weight. The amount of acid which is incorporated is sufficient to neutralize the carbonate or bicarbonate. The creamer may also include minor amounts of other ingredients of conventional foaming creamers such as buffers, gums, flavor and the like.

The foaming creamers may be packaged and used as such or they may be incorporated as a foaming creamer component of particulate, dry, instant hot beverage products. These beverage products include instant hot cappuccino products, flavored coffee products, hot cocoa, café latté, hot chocolate, and the like. Such beverage products may contain an instant (i.e. soluble) coffee component and a foaming creamer, and may include conventional optional components such as sweeteners, thickening agents, bulking agents, coloring agents, flavoring agents, flow control agents, buffers, gums, thickening agents and the like. In general, the amount of foaming creamer provided in such dry beverage products is in the range of about 25-75% by weight, based on the weight of the beverage product.

The coffee component, when present in the instant dry mix composition, comprises soluble coffee solids. Conventional spray dried instant coffee is preferred, but any type of powdered or granular dry soluble coffee solids may be employed. The composition may also include chocolate or other flavor ingredients which are intended to modify the coffee flavor of the beverage. The amount of the coffee component in the composition will vary considerably depending on the desired flavor. For an individual serving, the amount of the coffee component will generally from 0.75 to 5 grams, preferably 1-4 grams.

Where no sweetener is present, the amount of instant coffee in the instant hot beverage product is preferably in the range of about 10-30% based on the total weight of the instant coffee component and creamer.

A sweetener component is optional in the present instant hot beverage formulation. If present, the sweetener is present in an amount sufficient to provide appropriate beverage sweetness. In general, an amount of sweetener of up to about 75%, based on the instant beverage product, is suitable. Natural sugar sweeteners such as granulated sucrose are preferred. Other sugars may, however, be employed, either alone or in combination with sucrose. An artificial sweetener may also be employed in an amount which depends on its sucrose equivalence, provided that it will be effective in a hot beverage. Where a sweetener other than sucrose is utilized either alone or in combination with sucrose, it is preferably employed in an amount such that the sweetness of the sweetener component is equivalent to the amount of sucrose mentioned above. Thus, it is preferred that a beverage prepared from a sweetened hot cappuccino composition in accordance with the invention has a sweetness within the range of sweetness that would result from the use in the composition of sucrose alone in the amount mentioned above.

When it is desired to reduce or eliminate the sugar content of the formulation and incorporate one or more artificial sweeteners, a bulking agent such as maltodextrin may be substituted for substantially the same amount of sugar. Thickening agents, such as food grade gums, may also be employed to enhance mouthfeel of the beverage. Suitable gums, in amounts up to about 2%, include carboxymethylcellulose, carrageenan, and xanthan gum. Other minor optional ingredients include flow agents such as silicon dioxide and buffers such as sodium citrate.

The invention is further illustrated in the examples which follow.

Example 1

Gas Injected Foaming Creamer: 29% Protein

Concentrated dry milk solids (62 lbs. [28.12 kg] of Alapro 4560, New Zealand Milk Products, Inc.) containing 56% milk protein is added into 150.7 lbs. [68.36 kg] of water at 70°F [21.1°C] with stirring until the milk solids are dispersed. The temperature of the dispersion is raised to 110°F [43.3°C], and 77.22 lbs. [35.03 kg] of lactose is added with continuous stirring. The temperature is raised to 135°F [57.2°C] and 1 lb. [0.45 kg] of disodium phosphate is added to facilitate dispersion of protein in the slurry, and the slurry is held with stirring at 135°F [57.2°C] for 15 minutes. Temperature of the slurry is raised to 165°F [73.9°C], 20.4 lbs [9.25 kg] of partially hydrogenated soy bean oil is added, and the slurry is then held at 165°F [73.9°C] for 30 minutes to effect pasteurization. In each of the foregoing steps, stirring is continuous and the temperatures are chosen to facilitate dispersion or dissolution of the ingredients.

The slurry is then homogenized in a Manton-Gaulin two-stage homogenizer with first stage pressure of 2000 psi [13.79 MPa] and second stage pressure of 500 psi [3.44 MPa].

Carbon dioxide is introduced into the homogenized slurry through a sparger. Gas flow through the sparger is 0.25 standard cubic feet per minute (SCFM) (69.58 standard litres per minute) at 700 psi [4.83 MPa] to give a free flow density in the finished product of 0.15 g/cc. The gas flow rate is adjustable to vary the free flow density of the finished product.

The gasified slurry is then spray dried in a spray drying tower at 320°F [160.0°C] inlet temperature and 220°F [104.4°C] outlet temperature. Slurry feed pressure is 600 psi [4.14 MPa] and slurry flow rate is 30 gph [113.56 litres per hour]. The gasified, spray dried product has a free flow density of 0.15 gm/cc and has the following formulation:

| Component | % By Weight | Parts by Weight |
|---|---|---|
| Milk Solids (Alapro 4560) | 51.7 | 62 |
| Filler (added Lactose) | 30.5 | 36.6 |
| Buffer (DPS) | 0.8 | 1 |
| Lipid (added soybean oil) | 17 | 20.4 |
| Total | 100 | 120 |

The protein content of the creamer is 29% by weight milk protein, lipid content is 17.6% and filler content (arising from the added lactose and lactose present in the milk solids) is 46.5%, based on the weight of the creamer.

Ten grams of the product is dry blended with 10 gm sucrose to enhance dispersibility and the blend is introduced into a graduated glass column having an inside diameter of 60 mm. Two hundred and fifty ml of water at a temperature of about 185-195°F [about 85.0-90.6°C] is added and stirred for 15 seconds. An initial foam height is measured in the graduated glass column 15 seconds after the stirring has stopped and at 1, 2, 3 and 5 minutes after the stirring has stopped. Foam quality is evaluated by a group of trained food scientists by its appearance and by spooning. Results are reported in Table I.

## Example 2

### Foaming Creamer with Carbonation: 29% Protein

The procedure of Example 1 is followed, except that the homogenized slurry is spray dried without prior gas injection. The spray dried product has a free flow density of 0.30 gm/cc and otherwise has the same formulation as the gasified spray dried product of Example 1. Ten grams of the spray dried product is dry blended with 10 gm of sucrose, 0.375 gm of potassium bicarbonate, and 0.82 gm of glucono-delta-lactone. Foam height and quality are evaluated in the same manner as in Example 1. Results are reported in Table I.

## Example 3

### Gas Injected Foaming Creamer with Carbonation: 29% Protein

Ten grams of the gas injected creamer of Example 1 is dry blended with 10 gm sucrose, 0.375 gm potassium bicarbonate and 0.82 gm of glucono-delta-lactone. Foam height and quality are evaluated in the same manner as in Example 1. Results are reported in Table I.

## Table I

| Example | Foaming System | Foam Quality | Foam Height (mm) Time After Stopping Stirring | | | | |
|---|---|---|---|---|---|---|---|
| | | | 15sec | 1min | 2min | 3min | 5min |
| 1 | Gas Injection | ** | 26 | 25 | 20 | 18 | 16 |
| 2 | Chemical Carbonation | ** | 16 | 13 | 11 | 10 | 10 |
| 3 | Gas Injection and Chemical Carbonation | ** | 55 | 42 | 35 | 32 | 30 |

* Foam is creamy, whipped cream-like, tight (with small gas bubbles) and not runny, and has spoonability comparable to that of conventional cappuccino foam.

### Example 4

**Gas Injected Foaming Creamers: Protein Content 29% or 10%**

Example 1 is followed in preparing creamers 4A-4E except that each formulation''' is as follows:

| Ingredient | Control[3] | 4A | 4B | 4C | 4D | 4E |
|---|---|---|---|---|---|---|
| Water | 150.7 | 150.7 | 150.7 | 150.7 | 150.7 | 150.7 |
| NFDM[4] | 0 | 0 | 84 | 23 | 0 | 0 |
| Alapro 4560 | 62 | 21.5 | 0 | 0 | 0 | 0 |
| Sodium Caseinate | 0 | 0 | 6 | 2.1 | 0 | 0 |
| Lactose | 36.6 | 77.2 | 8.6 | 73.4 | 86.9 | 86.4 |
| Soybean Oil | 20.4 | 20.4 | 20.4 | 20.4 | 20.4 | 20.4 |
| Disodium Phosphate | 0.96 | 0.96 | 0.96 | 0.96 | 0.96 | 1.2 |
| Egg Albumin | 0 | 0 | 0 | 0 | 43.5 | 15 |
| Content[2] of: | | | | | | |
| Protein | 29% | 10 | 29 | 10 | 29 | 10 |
| Lipid | 18 | 17 | 17 | 17 | 17 | 17 |
| Filler | 47 | 70 | 44 | 72 | 50 | 76 |

[1] The amount of each ingredient is given in parts by weight.
[2] Content of the creamer; reported as % by weight based on the weight of the spray dried product.
[3] The foaming creamer of Example 1.
[4] NFDM means non fat dry milk.

The foaming creamers are evaluated as in Example I and results are reported in Table II.

Table II

| Formulation | Protein Content Wt% | Foam Quality | Foam Height (mm) Time After Stopping Stirring | | | | |
|---|---|---|---|---|---|---|---|
| | | | 15sec | 1min | 2min | 3min | 5min |
| Control | 29 | * | 20 | 25 | 20 | 18 | 16 |
| 4A | 10 | ** | 10 | 10 | 9 | 9 | 8 |
| 4B | 29 | * | 26 | 23 | 20 | 20 | 18 |
| 4C | 10 | ** | 12 | 11 | 10 | 10 | 10 |
| 4D | 29 | * | 26 | 24 | 23 | 20 | 17 |
| 4E | 10 | ** | 12 | 10 | 10 | 10 | 10 |

\* Foam is creamy, whipped cream-like, tight (with small gas bubbles) and not runny, and has spoonability comparable to that of conventional cappuccino foam.

\*\* The foam is thin, runny, soap-like, and drippy, with no spoon cling

As shown in Table II, foam quantity is significantly greater in each creamer having a high protein content, irrespective of the source of the protein. Foam quality of the high protein content creamers is remarkably different from the foam quality of the low protein content creamers.

### Example 5A

### Instant Hot Cappuccino Beverage: Gas Injected Creamer

An instant hot cappuccino beverage is prepared by placing a dry blend of 8.8 gm of the gas-injected foaming creamer of Example 1, 11.8 gm sugars, 1.5 gm of a commercial instant coffee, and minor amounts of buffer, vanilla flavor and flow agent into a 13 oz. (385.46 ml) mug. Eight ounces (236.59 ml) of hot water at a temperature of about 185-195°F [about 85.0-90.6°C] is added to create an instant hot cappuccino beverage. Evaluation is carried out by a group of trained food scientists, and results are reported in Table III.

### Example 5B

### Instant Hot Cappuccino Beverage: Creamer with Carbonation

An instant hot cappuccino beverage is prepared as in Example 5A except that the foaming creamer is the foaming creamer with carbonation of Example 2. Evaluation is carried out as in Example 5A and results are reported in Table IV.

### Example 5C

### Instant Hot Cappuccino Beverage: Gas Injected Creamer with Carbonation

An instant hot cappuccino beverage is prepared as in Example 5A except that the foaming creamer is the gas-injected foaming creamer with carbonation of Example 3. Evaluation is carried out as in Example 5A and results are reported in Table III.

### Comparison Example 5D

For comparison purposes, an instant hot cappuccino beverage is prepared in the same manner as in Example 5A except that a commercial instant hot cappuccino product is utilized. The formulation of the commercial product is the same as the dry blend of Example 5A except that the gas-injected creamer is replaced by 8.8 grams of a commercial gas-injected creamer having a protein content of 19% by weight.

Evaluation is carried out as in Example 5A and results are reported in Table III.

Table III

| Example | Protein Content (wt %) | Foam Quality | Foam Height (mm) Time After Stopping Stirring | | | | |
|---|---|---|---|---|---|---|---|
| | | | 15sec | 1min | 2min | 3min | 5min |
| 5A | 29 | * | 28 | 25 | 23 | 23 | 21 |
| 5B | 29 | * | 13 | 11 | 10 | 9 | 8 |
| 5C | 29 | * | 50 | 40 | 32 | 30 | 28 |
| Comparison 5D | 19 | ** | 15 | 14 | 13 | 13 | 13 |

* Foam is creamy, whipped cream-like, tight (with small gas bubbles) and not runny, and has spoonability comparable to that of conventional cappuccino foam.

** Foam is more watery and less creamy and has larger gas bubbles than the foam of Examples 5A-5C.

## Example 6

A foaming, hot chocolate, particulate drink mix is prepared utilizing the 29% protein-containing, gas injected foaming creamer set forth in Example 4B. The drink mix is made up of 79% of a conventional chocolate drink mix and 21% of the above-identified creamer. The chocolate drink mix is comprised of 30% milk chocolate flakes, 37% sugars, approximately 13% whole milk powder, 12% cocoa, 5% whey powder, 3% lactose and a minor amount of salt and vanilla. The foaming hot chocolate drink is prepared by mixing approximately 29 grams of the dry mix with approximately 130 ml of warm water (not boiling). The foam heights are measured in a similar manner as set forth in the previous examples except that the foam heights are reported only for the 1, 2 and 3 minute intervals. The foam heights are reported in Table IV below.

## Table IV

| Foaming Hot Chocolate Drink with Gas-Injected Creamer; 29% Protein Content | Foam Height (mm) Time After Stopping Stirring | | |
|---|---|---|---|
| | 1 min. | 2 min. | 3 min. |
| | 19 | 19 | 19 |

## Claims

1. A particulate, dry, foaming beverage creamer comprising protein, lipid and filler, said creamer being gas-injected and/or containing carbonation components for causing foaming on dispersing the creamer in a hot beverage, wherein the protein content of the foaming creamer is not greater than 40% by weight based on the weight of the creamer but not including a foaming creamer having a protein content less than 29% by weight.

2. A foaming creamer according to claim 1, wherein at least 50% by weight of the protein content of the creamer is milk protein.

3. A foaming creamer according to claim 1 or claim 2, wherein at least 75% by weight of the protein content of the creamer is milk protein.

4. A foaming creamer according to any one of claims 1 to 3, wherein the lipid content of the creamer is from 5 to 60% by weight, based on the weight of the creamer.

5. A foaming creamer according to any one of claims 1 to 4, wherein the lipid content of the creamer is from 15 to 25% by weight, based on the weight of the creamer.

**6.** A foaming creamer according to any one of claims 1 to 5, wherein the creamer is gas-injected.

**7.** A foaming creamer according to any one of claims 1 to 6, wherein the creamer comprises carbonation components.

**8.** A foaming creamer according to any one of claims 1 to 7, wherein the filler content of the creamer is from 10 to 75% by weight.

**9.** A foaming creamer according to claim 8, wherein said filler comprises at least one water soluble carbohydrate.

**10.** A foaming creamer according to claim 9, wherein said carbohydrate is selected from maltodextrin, lactose, and corn syrup solids.

**11.** A particulate, dry, instant hot foaming beverage product containing a foaming creamer according to any one of claims 1 to 10.

**12.** A dry beverage product according to claim 11, wherein the hot beverage is selected from cappuccino, flavored coffee, hot cocoa, café latté, and hot chocolate.


**Patentansprüche**

**1.** Teilchenförmiger, trockener, schäumender Getränke-Creamer, der Protein, Lipid und Füllstoff umfaßt, wobei der Creamer Gas injiziert und/oder Carbonierungs-Komponenten zur Bewirkung eines Schäumens beim Dispergieren des Creamers in einem Heißgetränk enthält, wobei der Protein-Gehalt des schäumenden Creamers nicht größer als 40 Gew.-%, bezogen auf das Gewicht des Creamers, ist und wobei aber ein schäumender Creamer, der einen Protein-Gehalt von weniger als 29 Gew.-% hat, nicht eingeschlossen ist.

**2.** Schäumender Creamer nach Anspruch 1, wobei mindestens 50 Gew.-% des Protein-Gehalts des Creamers Milchprotein sind.

**3.** Schäumender Creamer nach Anspruch 1 oder Anspruch 2, wobei mindestens 75 Gew.-% des Protein-Gehalts des Creamers Milchprotein ist.

**4.** Schäumender Creamer nach einem der Ansprüche 1 bis 3, wobei der Lipid-Gehalt des Creamers 5 bis 60 Gew.-%, bezogen auf das Gewicht des Creamers, ist.

**5.** Schäumender Creamer nach einem der Ansprüche 1 bis 4, wobei der Lipid-Gehalt des Creamers 15 bis 25 Gew.-%, bezogen auf das Gewicht des Creamers, ist.

**6.** Schäumender Creamer nach einem der Ansprüche 1 bis 5, wobei der Creamer injiziertes Gas enthält.

**7.** Schäumender Creamer nach einem der Ansprüche 1 bis 6, wobei der Creamer Carbonisierungs-Komponenten umfaßt.

**8.** Schäumender Creamer nach einem der Ansprüche 1 bis 7, wobei der Füllstoffgehalt des Creamers 10 bis 75 Gew.-% ist.

**9.** Schäumender Creamer nach Anspruch 8, wobei der Füllstoff mindestens ein wasserlösliches Kohlenhydrat umfaßt.

**10.** Schäumender Creamer nach Anspruch 9, wobei das Kohlenhydrat aus Maltodextrin, Lactose und Maisstärkesirup-Feststoffen ausgewählt ist.

**11.** Teilchenförmiges, trockenes, schäumendes Instant-Heißgetränk-Produkt, das einen schäumenden Creamer nach einem der Ansprüche 1 bis 10 enthält.

**12.** Trockenes Getränke-Produkt nach Anspruch 11, wobei das Heißgetränk aus Cappuccino, aromatisiertem Kaffee, heißem Kakao, Milchkaffee und heißer Schokolade ausgewählt ist.

**EP 0 813 815 B1**

**Revendications**

1. Crème pour boisson moussante, sèche, sous forme de particules, contenant une protéine, un lipide et un agent de remplissage, ladite crème étant injectée avec du gaz et/ou contenant des composants de carbonatation pour provoquer la formation d'une mousse lors de la dispersion de la crème dans une boisson chaude, dans laquelle la teneur en protéine de la crème moussante n'est pas supérieure à 40% en poids sur la base du poids de la crème mais ne comprenant pas une crème moussante ayant une teneur en protéine inférieure à 29% en poids.

2. Crème moussante selon la revendication 1, dans laquelle au moins 50% en poids de la teneur en protéine de la crème est une protéine de lait.

3. Crème moussante selon la revendication 1 ou la revendication 2, dans laquelle au moins 75% en poids de la teneur en protéine de la crème est une protéine de lait.

4. Crème moussante selon l'une quelconque des revendications 1 à 3, dans laquelle la teneur en lipide de la crème est comprise entre 5 et 60% en poids, sur la base du poids de la crème.

5. Crème moussante selon l'une quelconque des revendications 1 à 4, dans laquelle la teneur en lipide de la crème est comprise entre 15 et 25% en poids, sur la base du poids de la crème.

6. Crème moussante selon l'une quelconque des revendications 1 à 5, dans laquelle la crème est injectée d'un gaz.

7. Crème moussante selon l'une quelconque des revendications 1 à 6, dans laquelle la crème comprend des composants de carbonatation.

8. Crème moussante selon l'une quelconque des revendications 1 à 7, dans laquelle la teneur en agent de remplissage de la crème est comprise entre 10 et 75% en poids.

9. Crème moussante selon la revendication 8, dans laquelle ledit agent de remplissage comprend au moins un hydrate de carbone soluble dans l'eau.

10. Crème moussante selon la revendication 9, dans laquelle ledit hydrate de carbone est sélectionné parmi la maltodextrine, le lactose et la matière sèche de sirop de maïs.

11. Produit pour boisson moussante chaude instantanée, sec, sous forme de particules contenant une crème moussante selon l'une quelconque des revendications 1 à 10.

12. Produit sec pour boisson selon la revendication 11, dans lequel la boisson chaude est sélectionnée parmi le cappuccino, le café aromatisé, le cacao chaud, le caffé latté et le chocolat chaud.